# EUROPEAN PATENT APPLICATION

(11) **EP 1 810 808 A1**
(43) Date of publication of application: **25.07.2007**
(21) Application number: 06075107.0
(22) Date of filing: 18.01.2006
(51) Int. Cl.: B29C 35/02, B29C 71/00, B29C 71/02

(54) **Polymer window array for e.g. micro sensor**

(71) Applicant: Nederlandse Organisatie voor Toegepast-Natuurwetenschappelijk Onderzoek TNO, 2628 VK Delft (NL)
(72) Inventor: de Zwart, Renatus Marius, 5655 JP Eindhoven (NL); Kunen, Joseph Mathias Gerardus, 3123 PN Schiedam (NL); Biemans, Augustines Gerardus Maria, 5667 AL Geldrop (NL)
(74) Representative: Winckels, Johannes Hubertus F.

(57) **Abstract**

Method for manufacturing a polymer body (1) which comprises first areas (2) which are transparent and areas (3) which are non-transparent. A semi-manufactured body comprising said first areas and said second areas which are, however, either both transparent or both non-transparent, is produced by applying a well-known method. When the semi-manufactured body is entirely transparent, the polymer in the second areas is heated to above the polymer's melting temperature and subsequently cooled so slowly as to realize substantial crystallization of the polymer in the second areas. When the semi-manufactured body is entirely non-transparent, the polymer in said first areas is heated to above the polymer's melting temperature and subsequently cooled so quickly as to prevent substantial crystallization of the polymer in the first areas.

## Description

### Field

The invention concerns the manufacturing of high quality polymer (plastic) window array for e.g. micro sensors.

### Background

Polymer optical windows for e.g. micro sensors in clinical microbiological analysis must be highly transparent and the mutual crosstalk of the optical analysis signals minimal. Conventional polymer processing techniques trying to produce one-piece window arrays have not been successful until now as they did not result in a sufficiently high transparency of the windows (low optical signal attenuation) and/or a sufficiently low signal crosstalk level between those windows.

Use of two materials, viz. optical transparent micro structures for transferring optical signals and an optical non-transparent frame material for mechanical support and optical signal isolation (crosstalk prevention), gives problems w.r.t. the manufacturing and particularly the assembly of such arrays. Positioning and fixing of the optical micro structures (lenses, windows) within the frame make high demands on process and materials (location accuracy, damage of optical structures, shrinking differences) while extra care is required for mutual binding the micro structures and frame.

### Summary

Aim of the present invention is to provide a method for manufacturing a polymer body which comprises one or more first areas which are transparent and one or more second areas which are non-transparent.

The method is based on the understanding that the morphology of polymers may comprise amorphous (non- crystalline, transparent) areas and/or crystalline (non-transparent) areas. The degree of crystallinity of so called semi-crystalline polymers is determined by the thermal history of the polymer, especially by the cooling rate.

In general it can be stated that cooling down quickly will suppress the formation of crystals, resulting in a more amorphous polymer, whereas slow cooling will lead to the formation and grow of crystals.

The method according to the invention comprises next steps:
a. a semi-manufactured body is produced by applying any method known as such, the semi-manufactured body comprising said first and second areas which, however, in this semi-manufactured stage are either both transparent or both non-transparent;
b. when the first and the second areas of the semi-manufactured body are transparent, the polymer in said second areas is heated to above the polymer's melting temperature and subsequently cooled so slowly as to realize substantial crystallization of the polymer in the second areas;
c. when the first and the second areas of the semi-manufactured body are non-transparent, the polymer in said first areas is heated to above the polymer's melting temperature and subsequently cooled so quickly as to prevent substantial crystallization of the polymer in the first areas.

It may be preferred to start with an entirely non-transparent semi-manufactured body (option c), because the cooling down time, which has to be so short as to prevent substantial crystallization of the polymer in the first areas, will be, in consequence, shorter than when starting with an entirely transparent semi-manufactured body (option b), where the cooling down time has to be rather long, viz. long enough for the crystallization process in the second areas to realize a non-transparent morphology there.

On the other side, it may preferred to start with an entirely transparent semi-manufactured body (option b), because the focus can primarily be put on the optical transparency of the starting material of the semi-manufactured body, ignoring possible signal crosstalk problems, which are resolved in the final manufacturing stage, viz. by (re)heating and crystallization the second areas, serving as crosstalk preventing barriers.

The semi-manufactured polymer body may be manufactured by e.g. a well-known process like injection moulding, warm pressing of sheet or film e.g. by means of embossing or via a roll-to-roll process etc. When starting with a entirely transparent semi-manufactured body, in the second production step optical non-transparent, anti-crosstalk barriers are realized e.g. around the optical transparent (micro)windows. When starting with a entirely non-transparent semi-manufactured body, in the second production step optical transparent e.g. (micro)windows may be made within the non-transparent environment. To either case, the polymer of the semi-manufactured body is melted locally and then cooled in a controlled way, either quickly, to prevent (re)crystallization, or slowly, to realize deliberate (re)crystallization.

Local heating of the semi-manufactured body can be performed within or outside the mould which was used to make the semi-manufactured body. Electric, fluid, laser heating, micro wave and ultrasonic heating may be applied to change the amorphous polymer structure into a semi-crystalline or inversely. Without additives to the polymer, a CO₂ laser may be used or, by adding a NIR absorbing additive, a diode laser.

Cooling rates for a polymer to become mainly amorphous are in the order of tens of degrees Celsius per second. When, however, the cooling down rate is about hundredths of degrees Celsius per second, a substantial crystalline state will be reached.

### Exemplary Embodiments

Figures 1a and 1b show two exemplary embodiments of a semi-manufactured body, serving as a starting structure for a micro-window array, to be made in a subsequent step.

Figure 2 shows an example of a polymer body made according to the method outlined above, starting from an fully transparent semi-manufactured body as shown in figure 1a.

Figure 3 shows an example of a polymer body made according to the method outlined above, starting from an fully non-transparent semi-manufactured body as shown in figure 1b.

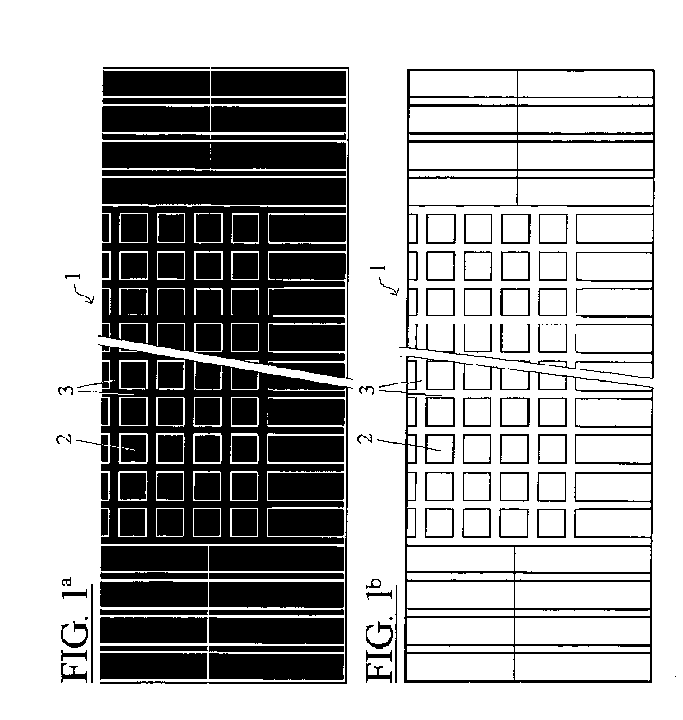

Figure 1a shows a entirely transparent (coloured black) polymer body 1 in semi-manufactured fashion, e.g. made by injection moulding, which comprises several first areas 2 and several second areas 3. Both, the first areas 2 and the second areas 3 are transparent, as is the entire body 1.

Figure 1b shows a entirely non-transparent (coloured white) polymer body 1 in semi-manufactured fashion, e.g. made by injection moulding, which comprises several first areas 2 and several second areas 3. Both, the first areas 2 and the second areas 3 are non-transparent, as is the entire body 1.

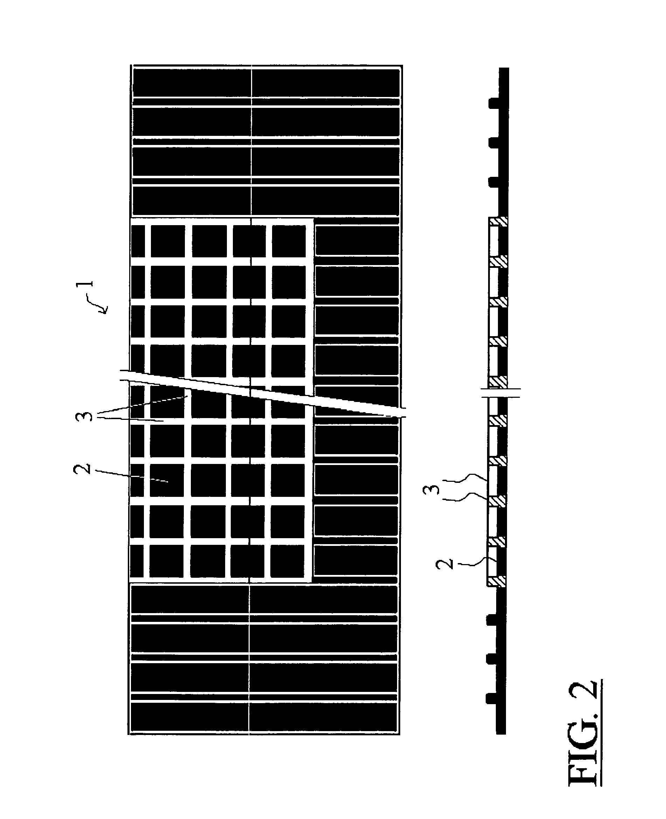

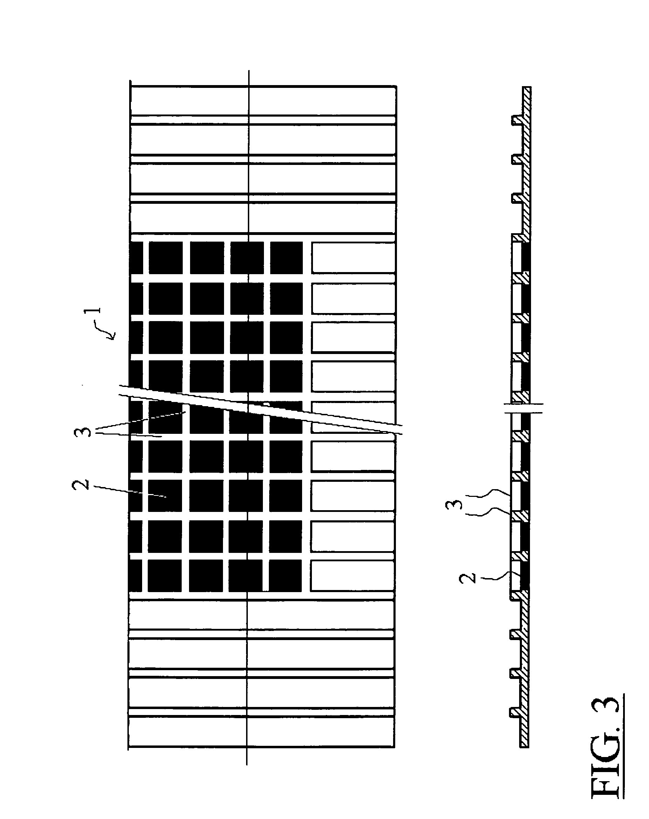

Figures 2 and 3 both show - in top view and in cross-sectional view - the same polymer body 1, in which, however, the first areas 2 are transparent and the second areas 3 non-transparent. The areas 2 may serve as transparent (micro-)windows or optical gates, whereas the areas 3 serve as non-transparent barriers, surrounding the window areas 1 and thus preventing optical crosstalk between the individual windows 2. The polymer body 1 is made from the fully transparent semi-manufactured body 1 shown in figure 1a or from the fully non-transparent semi-manufactured body 1 shown in figure 1b.

When (see figure 1a) the body 1 in its semi-manufactured fashion is entirely transparent (including the areas 2 and 3), in order to get its desired final fashion, as shown in figure 2, the polymer material in the areas 3, i.e. in the ribs surrounding each individual window area 2, is (re)heated locally to above the polymer's melting temperature and subsequently cooled down sufficiently slow - in the order of hundredths of degrees Celsius per second - to realize that the molten polymer in (only) the areas 3 will crystallize due to the long cooling time, resulting in a non-transparency of the ribs 3 (white in the figure), while the remaining parts of the body, which were not reheated, including the windows 2, will keep the original transparency (black in the figure) of the semi-manufacture.

When (see figure 1b) the body 1 in its semi-manufactured fashion is entirely non-transparent (including the areas 2 and 3), in order to get its desired final fashion, as shown in figure 3, the polymer in the window areas 2, is (re)heated locally to above the polymer's melting temperature and subsequently cooled sufficiently quick - in the order of tens of degrees Celsius per second - to prevent that the molten polymer in (only) the areas 2 will (re)crystallize, viz. due to the lack of crystallization time, resulting in transparency of the windows 2 (black in the figure), while the remaining parts of the body, which not reheated, including the ribs 3, will keep the original non-transparency (white in the figure) of the semi-manufactured fashion of body 1.

Heating the areas 2 or 3 respectively - e.g. by laser heating - may either be performed when the semi-manufactured body still remains in the mould or in another device after the semi-manufactured body has taken out of the injection mould.

It is noted that in both cases - viz. either starting from a transparent or from a non-transparent semi-manufactured body 1 -, the polymer body 1 in semi-manufactured fashion could be made from or even be part of a (pre-manufactured) foil - e.g. stored on a roll - instead of made by injection moulding. When made from foil the areas 3, which are somewhat protruding in the figures, will preferably protrude minimally or entirely not.

In the case that the polymer body 1 in semi-manufactured fashion is made from or part of a pre-manufactured foil, e.g. wound at a storage coil, both process steps could be performed by means of some form of "embossing" or "roll-to-roll" processing. In such a (more continuous) processing environment the heating of the areas 2 or 3 respectively may be performed in the form of a (semi-)continuous process, e.g. during unloading of the semi-manufactured (foil) body - part of a (semi-)continuous foil flow - from its storage coil (reel) either to another storage coil or to another processing or storage module.

## Claims

1. Method for manufacturing a polymer body (1) which comprises one or more first areas (2) which are transparent and one or more second areas (3) which are non-transparent, the method comprising next steps:
a. a semi-manufactured body comprising said first areas and said second areas which are, however, either both transparent or both non-transparent, is produced by applying a method known as such;
b. when the first and the second areas of the semi-manufactured body are transparent, the polymer in said second areas is heated to above the polymer's melting temperature and subsequently cooled so slowly as to realize substantial crystallization of the polymer in the second areas;
c. when the first and the second areas of the semi-manufactured body are non-transparent, the polymer in said first areas is heated to above the polymer's melting temperature and subsequently cooled so quickly as to prevent substantial crystallization of the polymer in the first areas.

2. Method according to claims 1, said semi-manufactured body being made using a mould and heating the first or second areas is performed when the semi-manufactured body still remains in the mould.

3. Method according to claim 1, said semi-manufactured body being made using a mould and heating the first or second areas is performed after the semi-manufactured body has taken out of the mould.

4. Method according to claim 1, heating the first or second areas is performed by means of one or more laser beams.

5. Method according to claim 1, applying, for making said first areas transparent, a cooling rate in the order of tens of degrees Celsius per second.

6. Method according to claim 1, applying, for making said second areas non-transparent, a cooling rate in the order of hundredths of degrees Celsius per second.

7. Method according to claim 1, said semi-manufactured body being stored at storage means and heating the first or second areas is performed when the semi-manufactured body still remains in the mould at said storage means.

8. Method according to claim 1, said semi-manufactured body being stored at first storage means and heating the first or second areas is performed when moving the semi-manufactured body from said first storage means to second storage means.
